# EUROPEAN PATENT SPECIFICATION

(11) **EP 2 956 386 B1**
(45) Date of publication and mention of the grant of the patent: **19.07.2017**
(21) Application number: 14704828.4
(22) Date of filing: 18.02.2014
(51) Int. Cl.: B65D 85/804

(54) **PACK FOR THE PREPARATION OF A BEVERAGE, RANGE OF PACKS, METHOD AND MACHINE**
PAKET FÜR DIE VORBEREITUNG EINES GETRÄNKES, SORTIMENT VON PAKETE, METHODE UND MASCHINE
PAQUET POUR LA PREPARATION D'UNE BOISSON, ENSEMBLE DE PAQUETS, PROCÉDÉ ET MACHINE

(30) Priority: 18.02.2013 EP 13155631; 18.02.2013 EP 13155634; 23.07.2013 EP 13177535
(43) Date of publication of application: 23.12.2015
(73) Proprietor: Nestec S.A., 1800 Vevey (CH)
(72) Inventor: KAESER, Thomas, CH-1817 Brent (CH); BUTSCHER, Silvio, CH-2054 Chézard-St Martin (CH); STRUZKA, Pierre, CH-2300 La Chaux-de-Fonds (CH); DENISART, Jean-Luc, CH-1096 Cully (CH); NEUROHR, Damien, 1950 Sion (CH); MARMIER, Yves, CH-2300 La Chaux-de Fonds (CH); DASSI, Sébastien, CH-2072 St- Blaise (CH); SCHERZ, Cynthia, CH-1165 Allaman (CH); CHIAPPINI, Fabien, CH-1213 Petit Lancy (CH); MÜLLER, Martin, CH-6048 Horw (CH); CZARNETZKI, Christoph, 57413 Finnentrop (DE); RÖMER, Frank, D-57413 Finnentrop (DE)
(74) Representative: Navarro Fernández, Maria Isabel
(86) International application number: PCT/EP2014/053134
(87) International publication number: WO 2014/125123

(56) References cited:
- WO-A1-99/05044
- WO-A1-2011/024103
- WO-A1-2011/054402
- US-A1- 2012 058 226

## Description

### Field of the invention

The present invention relates to packs and methods for the preparation of foods or beverages from packs comprising a food or beverage ingredient.

### Background of the invention

It is known to prepare beverages by introducing a capsule containing a beverage making ingredient, such as ground coffee or instant coffee, in a beverage dispensing machine and injecting water into the capsule. The beverage making ingredient is extracted or dissolved into water to form the beverage. The beverage flows out of the capsule through a suitable outlet.

Different capsules have been developed in the past that can differentiate at least by the nature of the capsule body used for storing the food or beverage ingredient. Whereas most of the capsules are made of a rigid body or semi-rigid body (e.g. made though injection moulding, thermoforming, deep drawing, ...) flexible types of packs or sachets can be made out of foil materials. Flexible packs have generally the advantage to semi-rigid and rigid capsules that less amount of material is used to pack the product which leads to overall less production cost and lower life cycle impact shown in several life-cycle assessments.

WO 99/05044, GB 2 374 856 and WO 2012/175985 describe such a flexible pack made of two sheets of flexible air-and liquid-impermeable material bonded on theirs edges to define an inner volume for storing the beverage ingredient. The pack comprises an inlet nozzle at its top for introducing water that is mixed with the beverage ingredient inside the inner volume. The beverage is evacuated through a beverage outlet at the bottom of the sachet. The outlet is created further to bursting of the pack under the pressure of water introduced in the sachet. Generally the outlet is created due to the separation of the bottom edges of the flexible sheets further to the effect of heat or pressure in the sachet. According to a particular embodiment a spout can be introduced at the bottom of the pack : in that embodiment, the bottom edges of the flexible sheets do not separate and the beverage is evacuated by the spout.

These flexible sachets present drawbacks. Generally the opening of the beverage outlet is obtained by increase of pressure inside the sachet. Yet this pressure increase is not recommended for the preparation of some beverages because it creates bubbles at the surface of the beverage ; for example it is not desired for the preparation of tea. Besides there can be a risk that the packages may not rupture at the desired pressure and that it can finally opens up in an uncontrollable explosion. For this reason the apparatus comprises means for totally enclosing the pack in the machine during beverage preparation and avoid damages or injuries for the operator.

Another drawback of these sachets is that the inlet spout introduces water in the pack always according to the same vertical top-down orientation in the sachet. Then all the beverages are produced according to the same process inside the sachet. Yet depending on the nature of the beverage ingredient and the desired beverage the beverage ingredient should be processed differently depending e.g. if foam is desired or not. In WO2012175985 a solution has been proposed which consists in proposing a beverage machine with different brewing heads (clamp) either for high pressure or low pressure beverage preparation.

Another drawbacks of these sachets is that it does not enable the delivery of foamy beverages, in particular milky beverages, directly from the sachet. Foamy beverages must be frothed in the drinking cup with a water jet as described in GB2374586. This implementation requires a longer time to prepare a foamy beverage (first for preparing the beverage from the sachet, secondly for frothing the beverage with the water jet) and does not give the feeling of a high quality beverage to the consumer.

WO 2011/024103 describes a pack for preparing a beverage defining an inner volume for storing the beverage ingredient. The inner volume is closed at its top by a rigid piece that integrates the water inlet and the beverage outlet. During the preparation of the beverage the beverage outlet is positioned at the top of the pack. Water is introduced until it fills the pack and overflows through the beverage outlet positioned at the top of the pack too. Such a pack is conceived for preparing a beverage by extraction of roast and ground coffee but not by dissolution of instant coffee or other soluble materials. For this reason the pack comprises a filter at the outlet to prevent insoluble particles from being dispensed with the beverage. An inconvenient of such a pack is that at the end of the preparation of the beverage and the introduction of water, beverage remains in the pack which is an issue for properly removing the pack from the beverage production machine. Besides in this pack neither the water inlet nor the beverage outlet are close by a membrane ; then this implementation is not recommended in terms of hygiene and shelf life. The prior art is also disclosed in WO 2011/054402 A1. The object of the present invention is to propose a pack for the preparation of a food or beverage that improves the hereabove problems in terms of manufacturing, beverage preparation simplicity and cleanliness leading to an optimal overall beverage quality.

### Summary of the invention

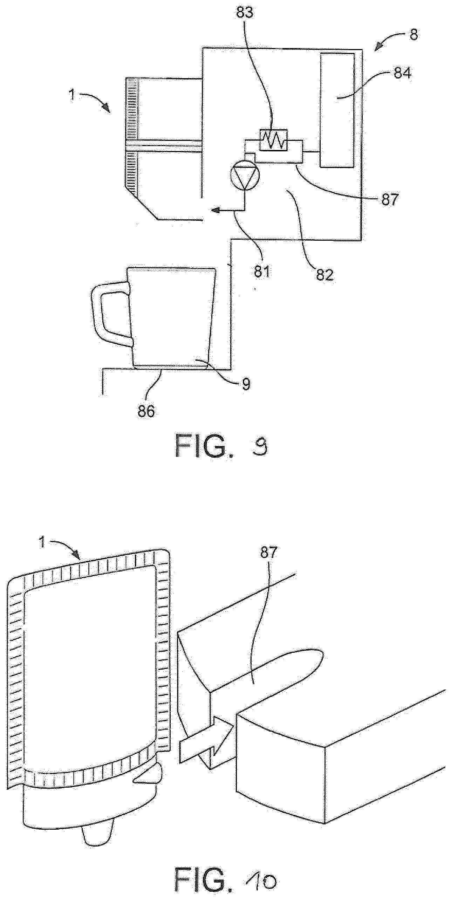

Firstly the invention concerns a pack according to any of claims 1-14. In the present application the terms "bottom", "top", "lateral", "horizontal" and "vertical" are used to describe the relational positioning of features of the invention. These terms should be understood to refer to the pack in its normal orientation when introduced in a beverage preparation machine for the production of a beverage as shown for example in Figures 9 to 12.

According to the invention "next to the bottom" means that both the inlet and the outlet are positioned on the bottom edge of the pack and/or on the bottom part of one of the lateral sides of the package. The invention covers the different variants where both the inlet and the outlet are on the same edge of the pack that is both on the bottom edge or both at the bottom part of a lateral side and where either the outlet or the inlet is on the bottom edge and respectively the inlet or the outlet is at the bottom part of a lateral side of the pack. According to the invention the bottom part of a lateral side of the pack generally corresponds to the part of said lateral side positioned below the middle part of the pack and preferably closer to the bottom part of the pack rather than the middle part of the pack.

In the present invention the term "water" covers any aqueous diluent that can be mixed with a soluble beverage ingredient to prepare a beverage, like water, carbonated water, milk. It is preferably still water.

Secondly the invention concerns a range of packs according to claim 15. Thirdly the invention concerns a method for the preparation of a food or beverage according to claim 16. Fourthly the invention concerns a machine according to claim 17.

### Brief description of the drawings

The characteristics and advantages of the invention will be better understood in relation to the following figures :
- Figures 1 to 7b illustrate packs according to the present invention,
- Figure 8a to 8e illustrate the movement of the liquid in the inner volumes of packs of the present invention,
- Figure 9 illustrates the preparation of a beverage with a pack according to the invention,
- Figures 10 to 12 illustrate particular modes of introduction of a pack in a beverage preparation machine,
- Figure 13 illustrates a range of packs according to the present invention.
- Figures 14a, 14,b, 14c and Figures 15a, 15b illustrate packs according to the fourth embodiment of the present invention,
- Figure 16 illustrates a method for manufacturing a pack,
- Figure 17 illustrates packs according to the third embodiment of the present invention,
- Figures 18, 19, 20a, 20b and 20c illustrate a pack and its insert according to one preferred embodiment of the present invention,
- Figures 21 a and 21 b illustrate a variant of the insert of Figures 18 and 19,
- Figures 22, 22b and 22c illustrate another variant of the insert of Figures 18 and 19,
- Figures 23 and 24 illustrate a range of packs according to the invention,
- Figure 25 is a partial section view of the second part 53 of the inlet chamber 32 of Figures 23 and 24,
- Figures 26 and 27 describe the insert 5 of Figure 23 before its insertion in the pack.
- Figures 28 and 29 describe the insert 5 of Figure 24 before its insertion in the pack,
- Figures 30a and 30b illustrate an insert presenting two symmetric water inlets,
- Figure 31 illustrates the preparation of a beverage with a pack according to the invention.

### Detailed description of the drawings

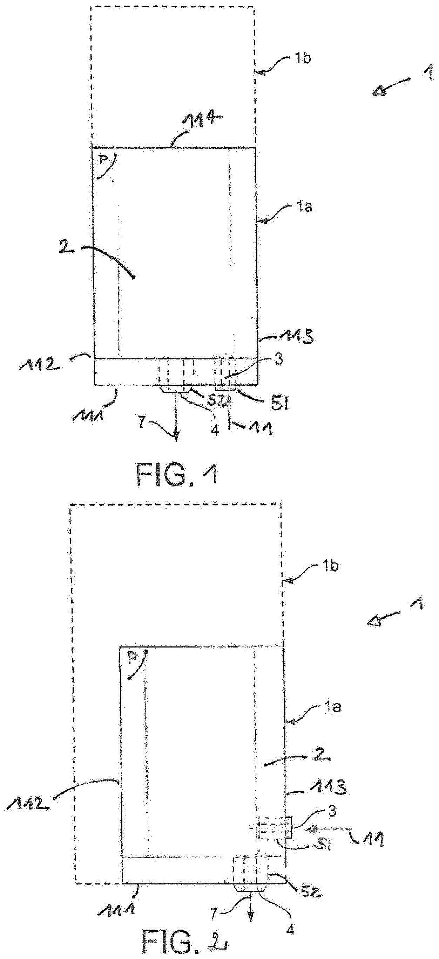

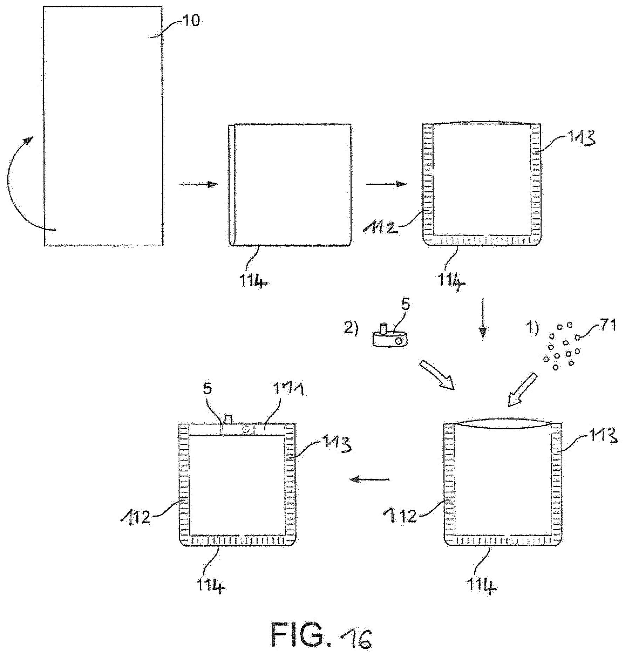

**Figure 1** illustrates a pack 1 for producing a beverage according to the invention. The pack comprises two flexible water impermeable sheets joined one to another on their edges 111, 112, 113, 114 to define an inner volume 2. These two sheets can be obtained by folding one sheet in its middle to form the top 114 of the pack too ; then only edges 112, 112, 113 have to be bonded together as illustrated in Figure 16. The bonding can be obtained by heat sealing. A beverage material is disposed within said inner volume. The pack comprises one inlet 3 configured for supplying water 11 in the inner volume 2 of the pack and one outlet 4 for dispensing a beverage 7 from the inner volume of the pack 2. The both inlet and outlet are positioned at the bottom of the pack at the bottom side 111 of the pack. The water inlet 3 and the beverage outlet 4 can be materialised as straight holes in respective rigid inserts 51, 52 enclosed inside the bottom bonded edge 111 of the pack.
**Figure 2** illustrates a variant of the pack of Figure 1 wherein the water inlet 3 is positioned next to the bottom of the pack in the lateral side 113 of the pack.

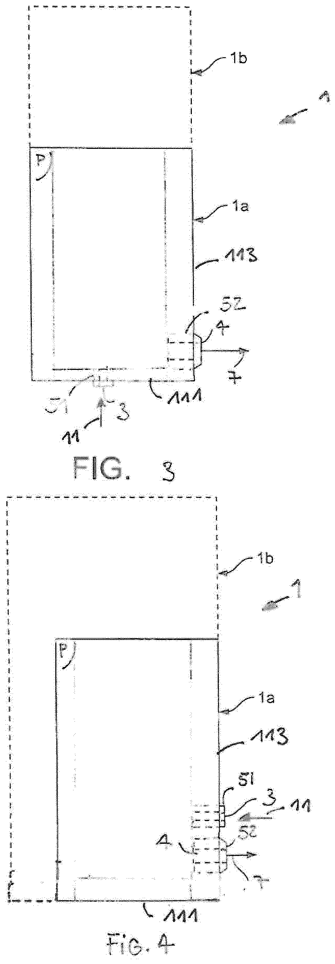

**Figure 3** illustrates another variant of the pack of Figure 1 wherein the water inlet 3 is still at the bottom bonded edge 111 of the pack but the beverage outlet 4 is positioned next to the bottom of the pack in the lateral side 113 of the pack.
**Figure 4** illustrates another variant of the pack of Figure 1 wherein the both water inlet 3 and beverage outlet 4 are positioned next to the bottom of the pack in the lateral side 113 of the pack. In said later variant the inlet 3 is preferably positioned above the outlet 4 in the lateral side bonded edge 113 of the pack.

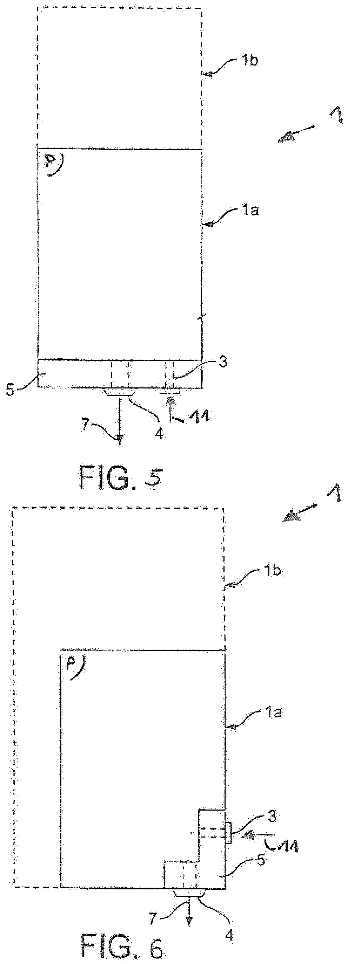

**Figures 5 and 6** illustrates respective variants of Figures 1 and 2 in which the inlet 3 and the outlet 4 are in the same single insert 5 rather than in two separate inserts 51, 52 according to the second embodiment of the present invention.

In the embodiment illustrated in Figures 1, 3 and 5 the water inlet 3 is configured for introducing the water jet upwardly and vertically. Yet as illustrated in Figures 2, 4 and 6 the water inlet 3 could also be a straight hole essentially horizontally oriented and introducing the water jet essentially horizontally inside the inner volume 2. According to the embodiments of Figures 2 and 6 a jet of water can cross the internal end of the beverage outlet.

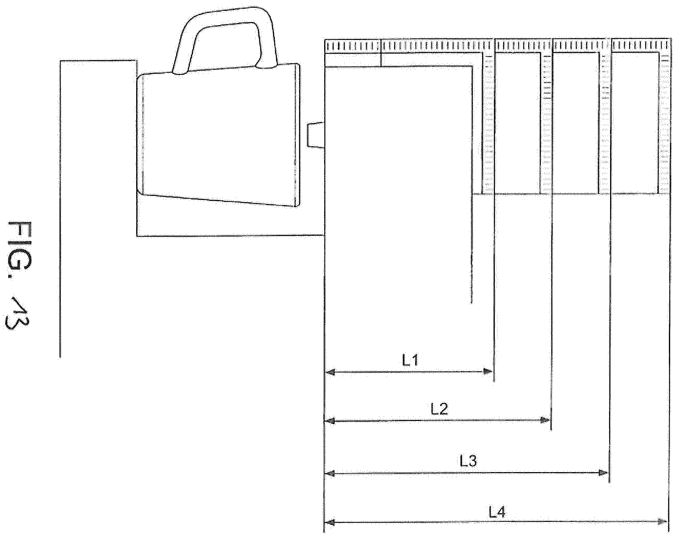

As illustrated in dotted lines in Figures 1 to 6 small packs 1 a or big packs 1 b can be produced with the same inserts 51, 52 and 5. Consequently it is possible to produce range of packs 1 a, 1 b differing by the size of the inner volume 2 and configured for preparing beverage with the same beverage preparation machine. The possibility to create a range of packs with the same insert is also illustrated in Figure 13.

For all the variants inlets and outlets can be straight holes inside inserts because they are easy to manufacture. Yet other embodiments wherein the inserts define holes with at least one change of direction can be implemented also. Such a change of direction can be helpful to improve the interface of the inserts with the beverage preparation machine, in particular the interface between the machine water supply and the water inlet insert. Such a change of direction can be helpful to control the water velocity in the inner volume of the pack and/or the water jet orientation in the inner volume of the pack also. The single insert presents the advantage of being easily positioned in the edges of the pack when it is manufactured compared to two inserts.

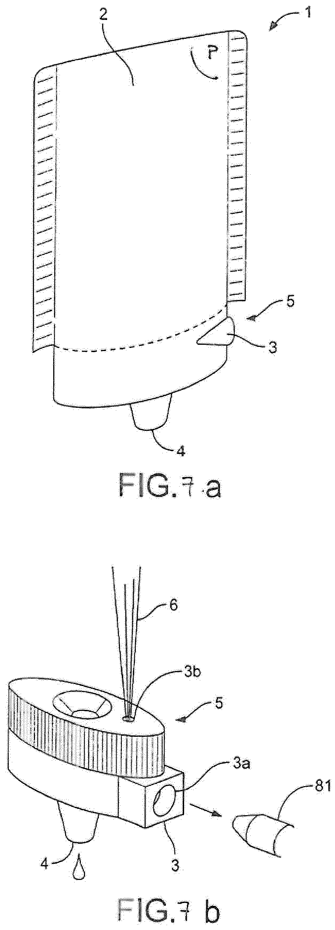

**Figures 7a and 7b** illustrate variants of the second embodiment of the present invention wherein the inlets and the outlets are holes inside one same single insert 5. These figures also illustrate a water inlet 3 that is not straight: the direction of the flow water at the external end 3a of the water inlet is almost perpendicular to the direction of the flow water at the internal end 3b of the water inlet. Such an insert enables cooperation with a beverage machine presenting a configuration such as described in Figure 10. The pack presents a generally plane shape : it is oriented along a plane P essentially vertically oriented during beverage production when the water nozzle 81 of a beverage preparation machine is introduced in the water inlet external end 3a as illustrated in Figures 7b and 10. The pack can be almost flat in the direction perpendicular to plane P.

In all the precedent figures the beverage and the water holes differ by their sizes generally. Preferably the beverage outlet 4 presents a sufficient section so as to enable a free flow of the beverage from the pack. The beverage 7 can freely flow in a drinking cup placed under the outlet 4. The outlet 4 can preferably be a hole having a transverse section with a surface area equivalent to the surface of a circular surface of diameter of at least 1 mm, preferably at most 4 mm, even more preferably comprised between 1,5 and 3 mm.

Due to the orientation of the pack the food or beverage ingredient usually stands at the bottom of the inner volume 2 when the pack is in position for beverage preparation. Consequently when water is introduced in the insert 51 next to the bottom of the pack it immediately penetrates the food or beverage ingredient and agitates it. The dissolution starts very rapidly. Moreover as the beverage or food issued from the dissolution of the ingredient with water flows down in the pack then said beverage or food is agitated again as long as water is introduced in the pack.

According to the first embodiment of the present invention the section of the water inlet 3 is configured so as to create a jet of water inside the inner volume 2. The water inlet 3 is configured for introducing the water jet in the inner volume of the pack at a high velocity. This velocity aims at :
- agitating the food or beverage ingredient in the inner volume 2,
- maintaining a circulation the food or beverage ingredient, the water and the resulting beverage in the inner volume 2 and avoiding that food or beverage ingredient is dispensed by the beverage outlet 4 before it has been sufficiently agitated and dissolved.

Depending on the nature of the food or beverage ingredient the high velocity water jet can create an emulsion with the water and the fats or oils issued from the ingredients. As a result a beverage with particular good mouthfeel can be obtained. In the case of production of a coffee espresso, a coffee with crema can be directly obtained from the pack without adding particular foaming additives in the beverage ingredient or without post treating the beverage to get the desired crema.

According to the invention, a water jet presenting a velocity of at least 20 m/s enables an optimal dissolution of food or beverage ingredient in the inner volume. A jet of water with high velocity can be created in the inner volume by injecting water through a small orifice. The water inlet can present a small section along all its length or it can present a constriction presenting such a small section. Usually this last implementation is preferred. The size of the section to get a jet of water in the inner volume usually depends from the pressure of the water introduced in the water inlet by of the beverage preparation machine. A transverse section with a surface area equivalent to the surface of a circular surface of diameter comprised between 0,3 and 0,5 mm and even more preferably of about 0,4 mm is particularly adapted for water delivered at the water inlet external end at a pressure comprised between 2 and 10 bar.

The water inlet is configured for transforming the high pressure water introduced by the beverage machine in the pack in a high velocity jet in the inner volume of the pack. The shape of the small section can be of any kind. Circular section is preferred for easy manufacturing.

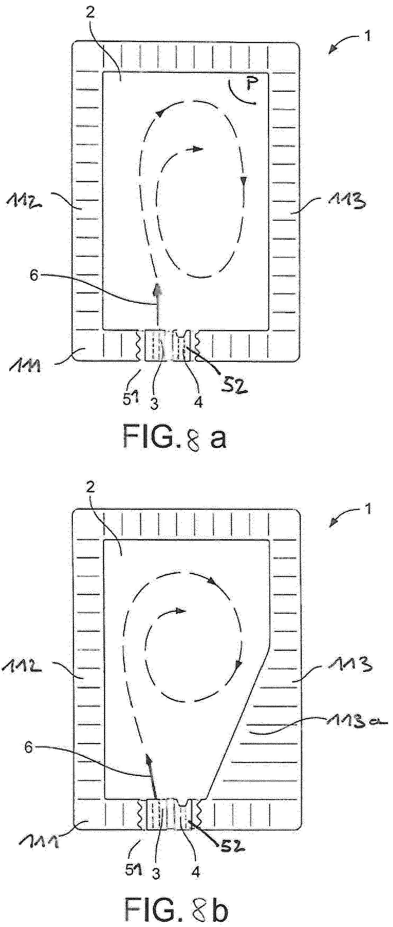

**Figure 8a** illustrates the movement of the liquid in the inner volume 2 of a pack 1 in the main plane P. The pack 1 presents lateral and bottom sealed edges 111, 112, 113. The bottom sealed edge 111 has been made partly transparent to show the inserts 51 and 52 comprising respectively the inlet 3 and the outlet 4. In such a pack the water jet 6 emerges with high velocity from the inlet 3 placed at the bottom, then flows upwardly and develops in a circular and spiral movement inside the main plane P of the pack. Due to this movement the liquid in the inner volume is not directed to the outlet 4 and keeps moving according to this movement as long as water is introduced through the inlet. The movement enables agitation and optimised dissolution of the food or beverage ingredient. Once the water is no more introduced in the pack or once water totally fills the inner volume beverage flows out of the pack through the beverage outlet 4. The outlet section is sufficiently large to create a gentle flow in the dinking cup placed under the outlet. The pack totally empties due to the position of the outlet next to the bottom of the pack.

**Figure 8b** illustrates a pack presenting an optimised internal shape of its inner volume. It presents the same feature as the pack of Figure 8a except that the seal on one of the lateral edge 113 is made larger at the bottom corner of the pack so as to configure the inner volume 2 with as slanted internal corner 113a. The water jet 6 emerging from the inlet 3 develops in a circular movement and the slanted edge 113a reinforces this movement alive by reorienting the movement upwards when it comes downwards. Such an embodiment can be particularly interesting for food or beverage ingredients that are difficult to dissolve and that must be strongly agitated. This configuration also enables to guide and push all the dose of food or beverage ingredient above the water inlet in the inner volume 2. Then the contact between the food or beverage ingredient and water is improved at the point where the water flow presents its higher velocity and agitation strength.

Although the bottom corner 113a is represented as completely internally sealed, it is also possible to create a simple sealing line inside the inner volume 2 to prevent liquid from circulating in the corner.

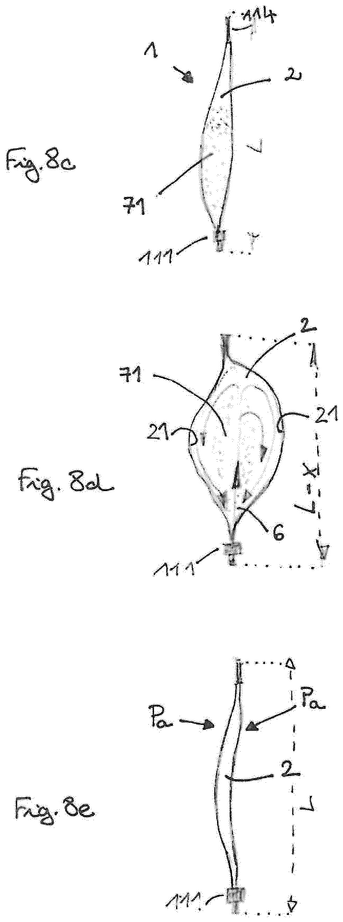

**Figures 8c, 8d, 8e** are longitudinal section views of a pack during different stages of the preparation of a beverage. Figure 8c is a section of the pack 1 at rest before introduction of water inside the pack with the bottom edge 111 positioned at the bottom and the edge 114 at the top inside the machine. The beverage ingredient 71 rests at the bottom of the inner volume 2. The pack extends along a length L between its two edges 111, 114.

Figure 8d shows the same pack during the introduction of water through the water inlet at the bottom of the pack. A jet of water 6 flows essentially vertically from the bottom to the top of the pack. In the main plane P of the pack the jet develops in circular movements as illustrated in Figure 8a. During the beverage preparation only the bottom of the pack cooperates with the beverage preparation machine while the top of the pack remains free. Consequently when water is introduced in the pack, due to the flexible nature of the sheet material of the pack and the freedom of movement of the pack top edge 114, the inner volume 2 of the pack can inflate. This inflation occurs mainly in the direction perpendicular to the main plane P. Then once the jet of water 6 has reached the top of the pack a part of water can also flow down through this inflated volume perpendicular to the main plane P. Here it has been observed that water flow is induced to follow the internal surface 21 of the inner volume. It follows that no beverage ingredient 71 can remain undissolved inside the inner volume 2 : the ingredient 71 is kept at the middle of the inflated volume and maintained or directed to the fluid circular movement described in Figure 8a. Another advantage of the fact that water flow is induced to follow the internal surface 21 of the inner volume is that at the end of the beverage preparation the inner chamber 2 is rinsed very effectively and no product remains in the pack.

Figure 8e illustrates the pack at the end of the beverage preparation. The beverage is delivered from the pack as soon as the inner volume 2 of the pack is full of water or as soon as the introduction of water in the pack is stopped since the beverage outlet is opened at the bottom. The beverage flows by gravity and its delivery is forced by the pack returning to its original shape and length L under the pressure of atmospheric pressure Pa. The emptying is efficient.

**Figure 9** illustrates the interaction of a pack according to the present invention with a beverage preparation machine 8. The machine comprises at least:
- a water tank 84,
- a heater 83 for heating water. The heating can deliver water at a temperature comprised between
- a bypass line 87 for delivering ambient water,
- a valve (not illustrated) for the selection of either hot or ambient water,
- a pump 82 for pumping water. The pump can deliver water at a pressure comprised between 2 and 10 bar,
- a water nozzle or needle 81 for injecting water in the water inlet of the pack 1.

Preferably the machine comprises an area 86 for positioning a drinking cup 9 under the beverage outlet of the pack when a beverage is prepared.

The machine comprises an area for receiving the pack that is configured so that the pack 1 is positioned so that the single insert is positioned at the bottom of the pack.

According to the invention the pack is not pressurized during the beverage preparation. This effect can be obtained by opening the beverage outlet before water is introduced in the pack or simultaneously to the introduction of the water in the pack. Consequently the beverage is prepared with the both inlet and outlet being opened. The opening of the inlet is usually made by a needle for introducing water. As for the beverage outlet it can be opened by the machine when the pack is placed inside or by the user manually. Although the beverage positioned at the bottom of the pack is opened during the beverage preparation it has been observed that no beverage flows from the outlet at least as long as water is introduced through the inlet. The jet of water maintains a sufficient agitation of the liquid in the inner volume to prevent beverage from flowing out without having been sufficiently agitated.

The machine can comprise beverage outlet opening means.

The machine can comprise means for reading pack recognition means in particular to assist use of the pack in a fully automated beverage production machine. The machine can read projections, perforations, a bar code, an optical code, a magnetic tag or an RFID tag of the pack.

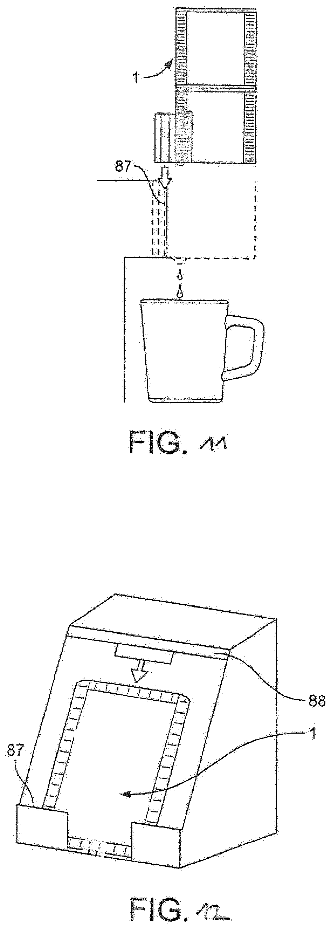

**Figures 10 to 12** illustrate examples of machine pack receiving area for introducing the pack 1 in the machine : Figure 10 illustrates the introduction according to a globally horizontal sliding movement whereas Figure 11 illustrates the introduction according to a vertical sliding movement and Figure 12 illustrates the simple positioning of the pack on a slightly slanted plane and the closure of a sliding cover 88 - e.g. a transparent cover - above the pack to launch the beverage preparation. Other receiving area and movements are possible depending on the positions of the water inlet in the pack (horizontally or vertically oriented, perpendicular to or inside the main plane of the pack) and on the position of the insert in the pack (in the corner, in the middle of the bottom).

**Figure 13** illustrates the possibility to create a range of packs with the same insert consequently it is possible to produce range of packs 1 a, 1 b differing by the size of the inner volume 2 (L1, L2, L3, L4) and configured for preparing beverage with the same beverage preparation machine.

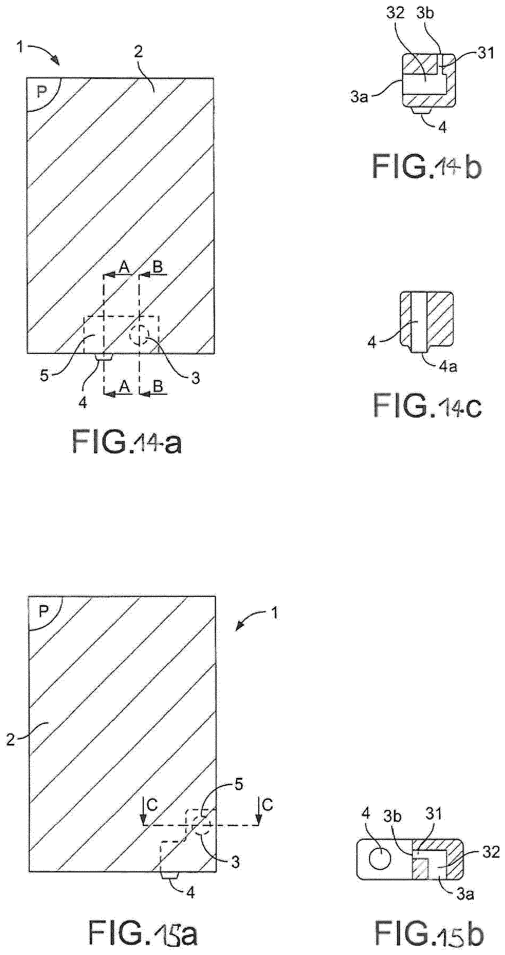

**Figure 14a** is a simplified illustration of pack according to the fourth embodiment of the present invention comprising an inner volume 2 in which a food or beverage ingredient is stored. The pack comprises at its bottom a single insert 5. The dotted lines correspond to the parts of the insert enclosed inside the pack. The insert 5 includes simultaneously a water inlet 3 for introducing water in the inner volume and a beverage outlet 4 for dispensing the beverage or food issued from the mixing of the food or beverage ingredient with water. The pack presents a generally plane shape. It is oriented along a plane P essentially vertically oriented during beverage production as illustrated in the Figure 14a. This plane shape is essentially provided by the material that creates and designs the inner volume 2 of the pack ; this material presents the shape of a sheet. Said sheet provides the plane shape to the pack. In Figure 14a the insert 5 is positioned at the centre of the bottom of the pack, yet it could be positioned at any other position between the two lateral ends of the bottom.

The internal designs of the water inlet and the beverage outlet are respectively illustrated in **Figure 14b****,** which is a view according to section B-B, and Figure 14c, which is a view according to section A-A. Figure 14c shows that the beverage outlet 4 is a straight vertical hole pierced in the insert 5. Preferably the beverage outlet 4 presents a sufficient section so as to enable a free flow of the beverage from the pack. The beverage can then freely flow in a drinking cup placed under the beverage outlet 4. Figure 14b shows that the external end 3a of the water inlet is oriented so as to be closed by the sheet of material that creates and designs the inner volume 2 of the pack. Said external end 3a comprises and inlet chamber 32. Said chamber present an evacuation hole 31 in its lateral upward wall so as to orient the water flow, preferably in the form of a jet, in the inner volume 2 inside the plane P.

The sheet of material that defined the inner volume 2 covers at least the part of the insert 5 so that the water inlet 3 is enclosed in the pack. Consequently the external end 3a of the water inlet is closed by the material that defines the inner volume of the pack. In the embodiment illustrated in Figure 14a a part of the beverage outlet - that is its external end 4a - is not enclosed in the pack.

**Figure 15a** is a variant of the pack of Figure 14a wherein the insert 5 presents an L-shape and is placed in the corner of the inner volume of the pack. The beverage outlet 4 presents the same feature as in the pack of Figure 14a. The water inlet is positioned in the upper part of the L-shape insert. The internal shape of the water inlet is illustrated in Figure 15b that is view of the insert 5 according to section C-C. The external end 3a of the water inlet comprises an inlet chamber 32 that is closed by the material that defines the inner volume of the pack. The chamber presents a essentially horizontal evacuation hole 31 in its lateral wall so as to orient the water flow, preferably in the form of a jet, in the inner volume 2 inside the plane P.

Although Figures 14a, b, c and 15a, b illustrates packs with single insert 5, packs can be made with different inserts for the water inlet 3 and the beverage outlet 4.

**Figure 16** illustrates a method for manufacturing a pack from a flexible sheet of material. First the sheet of material 10 that preferably presents a rectangular shape is folded in its middle and the superposed lateral edges are bonded together which creates pouch with bonded lateral edges 112, 113 and a folded edge 114. The folded edge 114 can also eventually be sealed to give a comparable aspect as the lateral edges for aesthetic aspect. Then food or beverage ingredient 7 is introduced in the pouch. Then the single insert 5 is placed between the two last opened edges and these edges are bonded together and around the insert to simultaneously close the pack, position the insert and close the water inlet. The inserts of the beverage outlet and the water inlet can be separated.

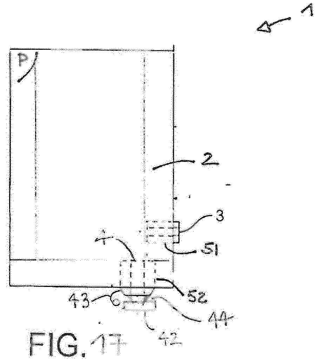

**Figure 17** illustrates the third embodiment of the present invention. The beverage outlet 4 is closed at its external end by a plug 42. This plug is made of one piece with the rest of the insert 52 in which the outlet if defined. During beverage production this plug is cut or torn for opening the beverage outlet. The insert comprises also a plastic bond 43 for maintaining the plug attached to the pack after the opening of the beverage outlet. Consequently it is avoided that the plug falls in the beverage during its production. The beverage outlet also presents a weakening narrow zone 44 near the plug 42 so that said plug can be made easy to cut or tear off the plug with the beverage machine.

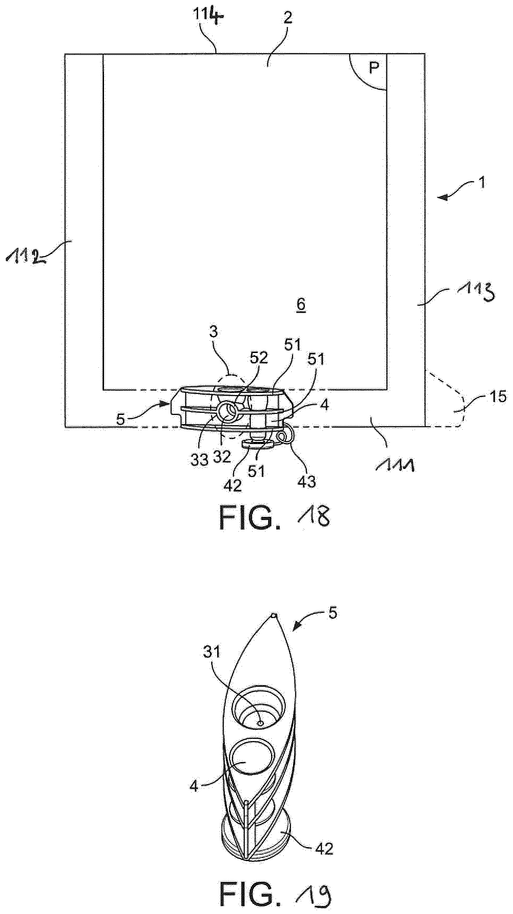

**Figure 18** illustrates a pack according one preferred embodiment of the invention. In this illustration the bottom middle part of the inner volume 2 has been made transparent to make the insert 5 apparent. **Figure 19** is a top perspective view of the insert alone. The pack is preferably a planar sachet : it is oriented along a plane P essentially vertically oriented during beverage production. The pack is almost flat in the third perpendicular direction. The inner volume 2 is made of a flexible material sheet, said sheet being folded in its middle to form the top 114 of the pack. The sheet is bonded on its edges 112, 113, 111 to define the inner volume 2. The bottom bonded edge 13 includes the single insert 5 : the fins 51 and the raising edge 52 around the water inlet 3 on the lateral sides of the insert improves the adhesion with the flexible material sheet during sealing. The sheet can comprise an excrescence 15 for improving manipulation of the pack.

The insert 5 is a single piece of material preferably of plastic. It includes simultaneously a water inlet 3 for introducing water in the inner volume and a beverage outlet for dispensing the beverage or food issued from the mixing of the food or beverage ingredient with water.

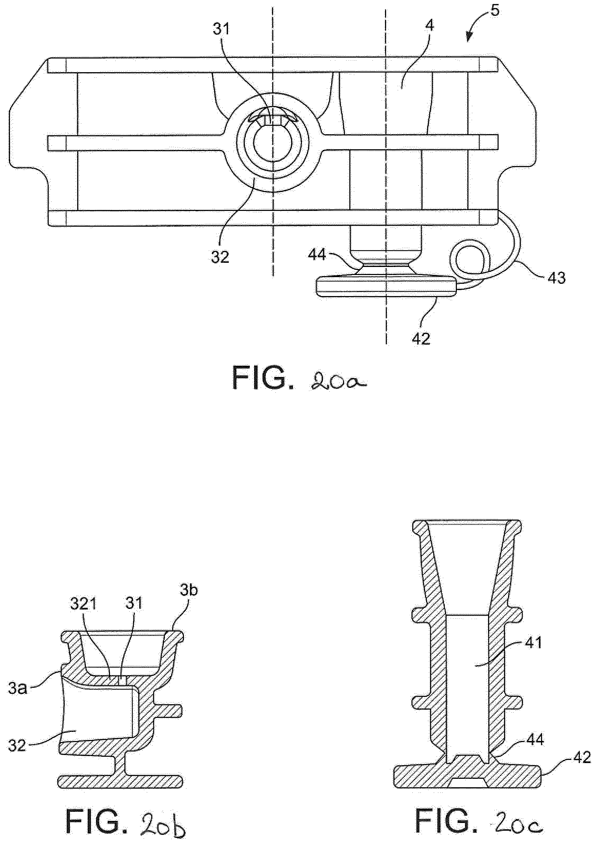

**Figure 20a** is a magnified view of the insert and **Figures 20b and 20c** are respective sectional views of the insert through water inlet and beverage outlet detailing the internal shapes of these fluid channels in the insert. The beverage outlet is a vertical hole pierced in the insert. It preferably presents a diameter for dispensing the beverage under free flow. The diameter is preferably above 2 mm for a circular section. The beverage outlet is closed at its external end by a plug 42. This plug is made of one piece with the rest of the insert. During beverage production this plug is cut or torn for opening the beverage outlet. The insert comprises also a plastic bond 43 for maintaining the plug attached to the pack after the opening of the beverage outlet. Consequently it is avoided that the plug falls in the beverage during its production. The beverage outlet also presents a weakening narrow zone 44 near the plug 42 so that said plug can be made easy to cut or tear off the plug with the beverage machine.

The water inlet 3 presents at its external end 3a an inlet chamber 32. This chamber is a hollow cavity ; it is globally horizontally oriented. Its dimensions are configured for receiving the hollow needle of a beverage preparation machine in order to inject water. The inlet chamber 32 presents an evacuation end in its upper lateral wall 321 : this evacuation end corresponds to an injection hole from which water can be injected in the inner volume 2 under the form of jet. The hole is circular and presents a diameter of at most 0,6 mm. Due to the configuration of the water inlet the water can be injected essentially horizontally in the inlet chamber 32 and essentially vertically in the inner volume 2 of the pack.

This embodiment of the invention presents the advantage of providing packs with inlet and outlet that are not in the vicinity of each other. Actually according to this embodiment the inlet and the outlet are on different sides of the pack : the beverage outlet external end is below the bottom of the pack whereas the water inlet external end is at the lateral side of the pack. Such a configuration particularly avoids contamination of the means for injecting water by the beverage flowing out of the beverage outlet. Besides a beverage preparation machine providing simultaneously a water injector and a dispensing area at the bottom of the pack receiving area is more difficult to conceive and does not enable an optimisation of the different elements of the machine.

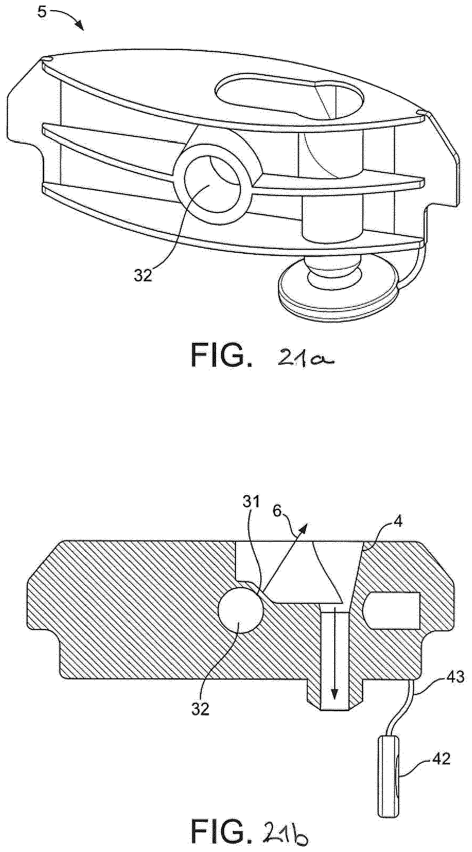

**Figures 21** **a and 21 b** illustrate a variant of the single insert of Figure 18. The beverage outlet presents the same feature as in the inert of Figure 18. The water inlet presents an inlet chamber 32 that is globally horizontally oriented. The inlet chamber 32 presents an evacuation end in its lateral wall : this evacuation end corresponds to an injection hole 31 from which water can be injected in the inner volume 2 under the form of jet. In this variant the injection hole 31 is positioned in the lateral wall of the inlet chamber so as to create a jet of water 6 that presents an angle of about 45° with vertical and that is oriented in direction of the beverage outlet 4 (other orientation of the angle varying between -90° and 90° with vertical can be implemented). As illustrated in Figure 21 b during the beverage preparation the plug 42 at the end of the beverage outlet is removed so as to create an opening of the beverage outlet 4. During injection of water though the water inlet the orientation of the jet 6 of water enables the agitation of the liquid above the beverage outlet opening which has for consequences that a part of the beverage above the outlet is carried away and circulated again inside the inner volume which improves dissolution and eventually foaming. It also enables the agitation of the part of the beverage that flows through the beverage outlet 4 ; then the properties of the beverage in terms of frothing are maintained until the beverage emerges from the outlet. The qualities of the beverage in the drinking cup are optimised since the beverage has no time to quietly settle in the inner volume.

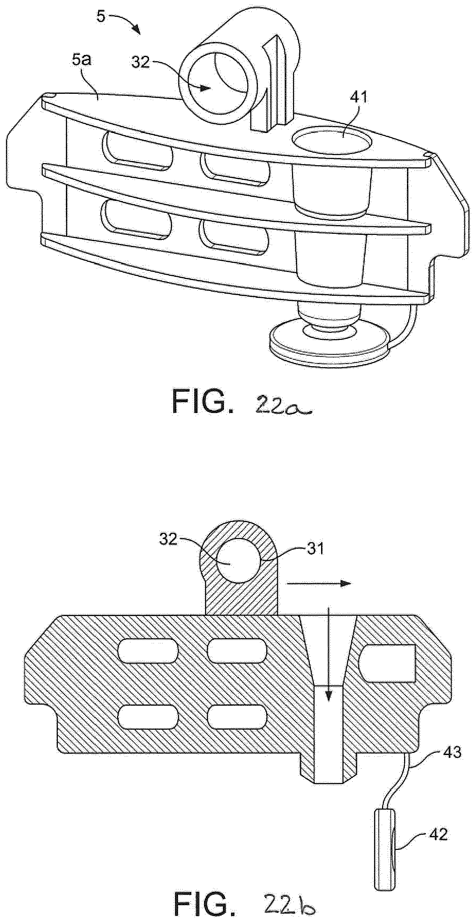

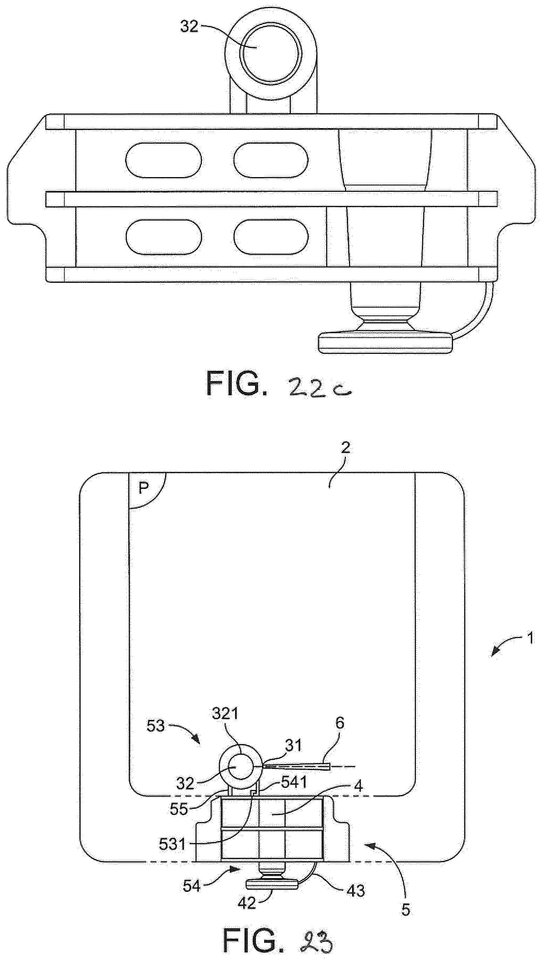

**Figures 22a, 22b** **and** **22c** illustrate another variant of the single insert of Figure 18. The beverage outlet presents the same feature as in the inert of Figure 18. The water inlet presents an inlet chamber 32 that is globally horizontally oriented. The inlet chamber 32 presents the simple shape of a cylinder that is attached at the upper part 5a of the single insert. As illustrated in Figure 22c this cylinder is opened at its both ends, which enables the introduction of a water needle either on one side or the other. The inlet chamber 32 presents an evacuation end in its lateral wall : this evacuation end corresponds to an injection hole 31 from which water can be injected in the inner volume 2 under the form of jet. In this variant the injection hole 31 is positioned in the lateral wall of the inlet chamber so as to create a jet of water 6 that is globally horizontal and that is oriented in direction of the beverage outlet 4. As illustrated in Figure 22b during the beverage preparation the plug 42 at the end of the beverage outlet is removed so as to create an opening of the beverage outlet 4. During injection of water though the water inlet the orientation of the jet 6 of water enables the agitation of the liquid above the beverage outlet opening which has the same consequences as described hereabove for the single insert of Figures 21a and 21 b.

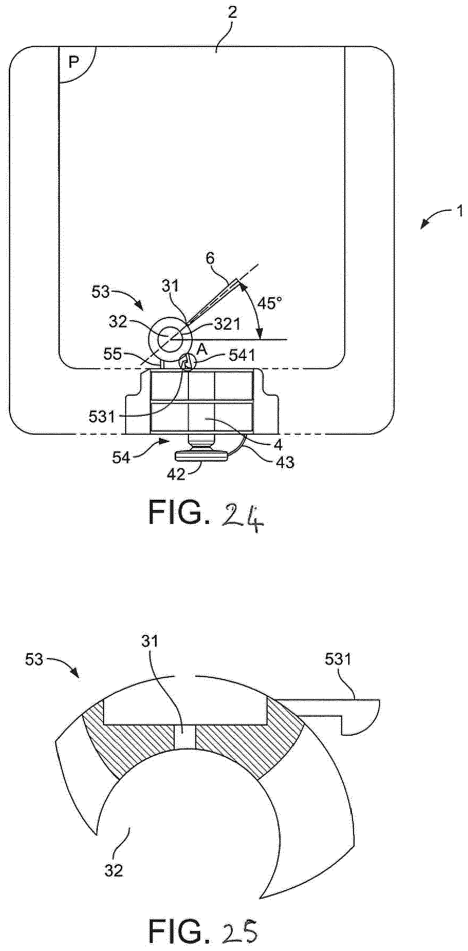

**Figures 23** **and** **24** illustrate a range of packs according to the invention. In these illustrations the bottom middle parts of the inner volumes 2 have been made transparent to make the inserts 5 apparent. The packs are preferably planar packs and present the same features as the pack of Figure 18 except the insert. In both Figures 23 and 24 the insert 5 is a single piece of material preferably of plastic. It includes simultaneously a water inlet for introducing water in the inner volume and a beverage outlet for dispensing the beverage or food issued from the mixing of the food or beverage ingredient with water. In both cases the single insert 5 is made of two parts 53, 54 attached together by a hinge 55 and by hooks 531, 541 that hang on together. The first part 54 comprises the beverage outlet 4. This beverage outlet presents the same features as the beverage outlet of Figure 18. The second part 53 comprises the water inlet. The water inlet comprises an inlet chamber 32 that is globally horizontally oriented. The inlet chamber 32 presents an evacuation end in its lateral wall 321 : this evacuation end corresponds to the injection hole 31 from which water can be injected in the inner volume 2 under the form of jet 6. The hole 31 is circular and preferably presents a diameter comprised between 0,2 and 0,8 mm, preferably between 0,3 and 0,5 mm and even more preferably of about 0,4 mm.

**Figure 25** is a partial section view of the second part 53 around the injection hole 31 and illustrating the fact that said is hole is pierced in the lateral wall of the inlet chamber 32. Figure 25 applies to the insert of Figure 23 or 24. In the configuration of Figure 23 the second part 53 is positioned so that the injection hole 31 essentially horizontally injects the jet of water 6 in the inner volume 2 of the pack. In the configuration of Figure 24 the second part 53 is positioned so that the injection hole 31 injects the jet of water 6 in the inner volume 2 of the pack according to an angle of 45° with horizontal.

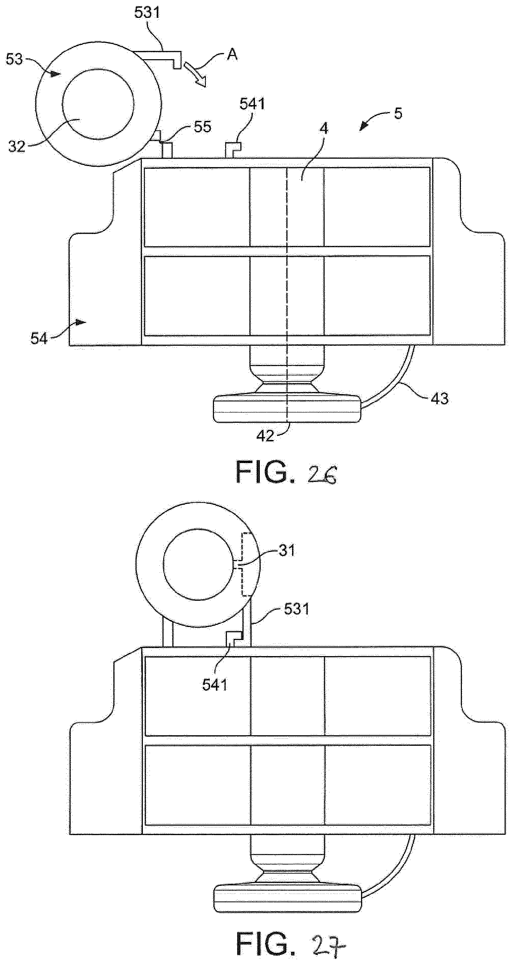

**Figures 26 and 27** describe the insert 5 of Figure 23 before its insertion in the pack. Figure 26 illustrates the insert such as directly obtained from manufacturing, preferably by plastic injection moulding. Directly after manufacturing the first and second parts 53, 54 are only attached one to the other by a hinge 55. This hinge is made sufficiently thin so as to be folded The first part 54 presents at its top a fastener 541 and the second part 53 presents on its lateral side a fastener 531. These both fasteners present the shape of hooks and are designed so that when the second part is moved near to the first part 54 by closing the hinge 55 (as illustrated by the arrow A in Figure 26) then they hang on together and the hooks maintain the first part 54 and the second part 53 in a fixed position which is illustrated in Figure 27. Once the hooks are hanged on together the insert 5 can be used for manufacturing the pack of Figure 23. The hooks are also designed so as to define the orientation of the injection hole 31 and consequently the orientation of the jet 6 in the inner volume 2 of the pack. This orientation can particularly be varied according to the length of one of the hooks, for example the hook 541 of the first part 54 in the illustration of Figures 23 and 26. The shapes of the hooks 531, 541 can also be adapted to the particular relative orientation of the two parts one to the other.

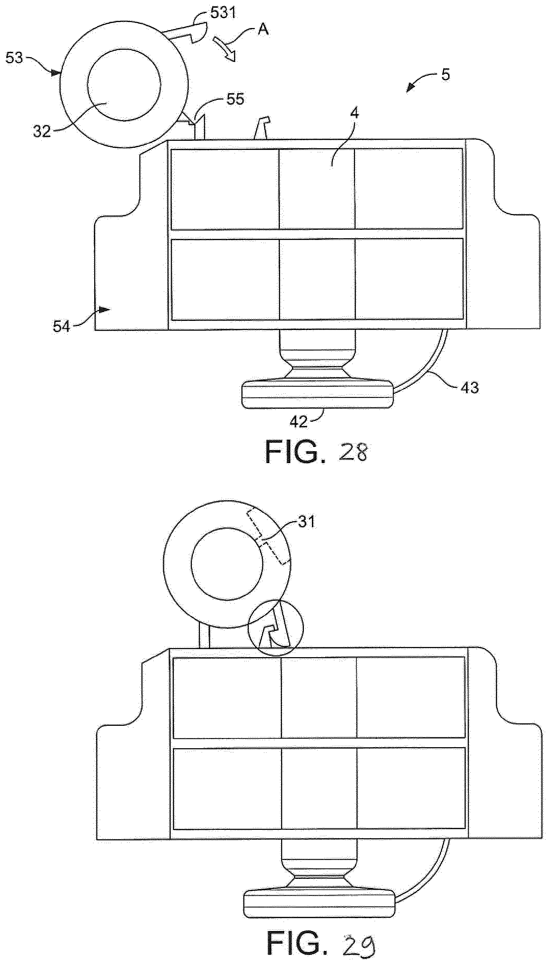

In the same manner as Figures 26 and 27, **Figures 28 and 29** describe the insert 5 of Figure 24 before its insertion in the pack. In the insert 5 of Figures 28 and 29 the hook 541 of the first part is longer than the corresponding hook of the insert of Figures 26 and 27. Consequently the second part 531 does not have to be turned around the hinge 55 as long as for the insert of Figures 26 and 27 for hanging on the hook 541 of the first part. As a consequence the injection hole 31 of Figures 28 and 29 can present a different orientation from the injection 31 of Figures 26 and 27.

This particular embodiment enables the production of a range of different packs adapted for the agitation and dissolution of different types of beverage or food ingredients.

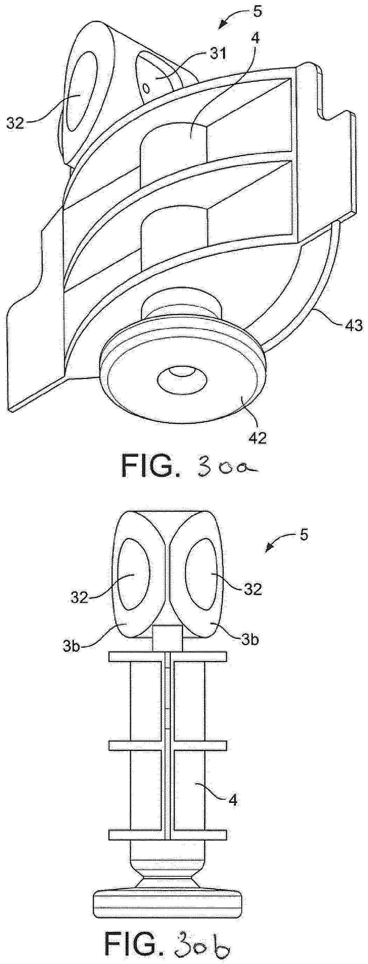

**Figures 30a and 30b** are respectively perspective and side views of an insert 5 that can be enclosed in a pack according to the present invention. The insert comprises one beverage outlet 4 and two water inlet chambers 32 placed symmetrically around the beverage outlet. Both of the water inlet chambers 32 are connected to the same injection 31. Depending on the sense of introduction of the pack in the beverage preparation machine either one or the other of the water inlet chambers 32 can be connected to the water supply. As the external ends 3b of the both water inlet chambers 32 are usually both closed before the use of the pack - e.g. covered by the sheet the pack is made of - the water needle of the beverage machine can pierce said sheet at one of the water inlet chambers 32 and remain the other water inlet chamber 32 closed.

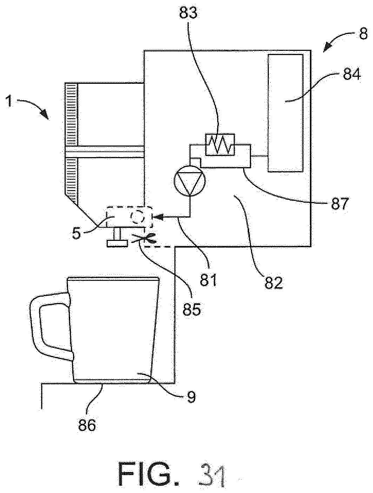

**Figure 31** illustrates the interaction of a pack according to the present invention with a beverage preparation machine 8. The machine comprises the same components as the machine of Figure 9 and a cutter 85 for cutting the plug of the beverage outlet of the pack 1 when the pack presents a plug at the beverage outlet as illustrated for example in Figures 17 and 18.

The cutter 85 can be positioned so that the plug of the beverage outlet is automatically cut when the pack is introduced in the machine or when the beverage preparation is activated.

The present invention presents the advantage of proposing packs for the preparation of food or beverages wherein a broad range of different foods and beverages can be produced with the same machine. The foods and beverages can differ by their natures (coffee, tea, chocolate, soup, ...), by their aspects (presence of crema for coffee, of foam for milk and chocolate, absence of bubbles for tea, ...), by their volumes (from espresso volume up to soup volume) and be obtained by the same machine. The machine elements can remain very simple and limited to a simple water needle.

The present invention presents the advantage of proposing a consumer friendly preparation of foods and beverages. The beverage of food delivered from the pack is ready to be served and does not require an additional process step, for example for foaming the beverage.

The present invention presents the advantage of proposing packs wherein the ingredients are fully protected from atmosphere before use.

The present invention presents the advantage of proposing packs or preparing beverages wherein the contact of ingredients and prepared beverage with the machine is avoided and the risk of cross contamination is limited. The prepared beverages present optimal organoleptic properties.

The present invention presents the advantage of proposing packs presenting a low environmental impact since it can be made of a laminated pouch with a small insert piece of plastic.

The present invention presents the advantage of proposing packs of global similar shapes but with particular internal difference in order to deal with the preparation of various beverages from various food or beverage ingredients presenting different properties like : difference of dissolution, ability to clog, difference of volume,

This is one key element of temper evidence proof allowing the consumer to detect if the sachet has been tempered before.

The present invention presents the advantage of proposing packs which can be very easily produced starting from flexible sheets and one single insert, for the simplest embodiment. In particular the pack usually does not comprise an internal filter or membrane to be positioned in the inner volume during manufacturing.

## Claims

1. A pack (1) with an inner volume (2) in which a food or beverage ingredient is stored and in which a beverage is produced when water is introduced inside, said pack comprising:
- at least one inlet (3) configured for supplying water in the inner volume of the pack,
- at least one outlet (4) for dispensing a beverage from the inner volume of the pack,
- the inlet and the outlet being positioned next to the bottom of the pack, the water inlet (3) being configured for introducing water under the form of a jet (6) in the inner volume of the pack, the beverage outlet being a straight tube,
said pack being **characterized in that**
the pack presents a plane shape oriented along a plane (P) which can be vertically oriented during beverage production while the water inlet (3) orientates the jet of water in a direction comprised in said plane and the beverage outlet (4) is oriented vertically at the bottom of the pack.

2. A pack according to claim 1, wherein the water jet can present a velocity of at least about 20 m/s.

3. A pack according to any one of the precedent claims, wherein the water inlet (3) is configured for transforming the pressurized water introduced by a beverage machine in the pack in a high velocity water jet in the inner volume (2) of the pack.

4. A pack according to any one of the precedent claims, wherein it comprises two flexible water impermeable sheets joined to one another to define the inner volume (2).

5. A pack according to any one of the precedent claims, wherein the beverage outlet (4) can deliver the beverage as a free flow.

6. A pack according to any one of the precedent claims wherein the beverage outlet (4) is an opening presenting a transverse section with a surface area equivalent to the surface of a circular surface of diameter of at least 1 mm, preferably at most 4 mm, even more preferably comprised between 1,5 and 3 mm.

7. A pack according to any one of the precedent claims, wherein the food or beverage ingredient is a soluble food or beverage ingredient.

8. A pack according to any one of the precedent claims wherein the water inlet (3) comprises a hole presenting a transverse section with a surface area equivalent to the surface of a circular surface of diameter comprised between 0,5 and 1,5 mm, preferably of at most 1 mm, more preferably at least 0,24 mm, preferably comprised between 0,3 and 0,5 mm, even more preferably of about 0,4 mm.

9. A pack according to any one of the precedent claims, wherein the water inlet is configured for orienting the water jet in direction of the beverage outlet (4).

10. A pack according to any one of the precedent claims, wherein said pack comprises one single insert (5) including the water inlet (3) and the beverage outlet (4), said single insert being positioned at the bottom (11) of the pack, optionally the single insert (5) of the pack presenting a shape for cooperating with the pack receiving area of a beverage production machine and preferably the single insert of the pack presenting a shape configured for sliding in the slot of the receiving area of a beverage production machine.

11. A pack according to Claim 10, wherein the single insert (5) is positioned at or next to the middle of the bottom of said face.

12. A pack according to Claim 10, wherein the single insert (5) is positioned at or next to a bottom corner of said face.

13. A pack according to any one of the precedent claims wherein the beverage outlet is closed by manufacturing and is configured for being opened at beverage production step, optionally the beverage outlet is closed by a plug (42), said plug comprising means for maintaining it attached to the pack after the opening of the beverage outlet, preferably :
- the means for maintaining the plug (42) attached to the pack is a plastic bond (43) attached to the single insert (5),
and/or
- the beverage outlet presents a weakening zone (44) near the plug,
and/or
the plug (42) is part of one single insert (5) including the water inlet (3) and the beverage outlet (4).

14. A pack according to any one of the precedent claims, wherein it comprises two flexible water impermeable sheets joined to one another to define the inner volume (2) and wherein the pack comprises one insert (5) including at least one water inlet (3) and wherein the water inlet (3) is enclosed in the pack by the sheets (10) defining the inner volume, optionally:
- the pack is a plane pack made of one material sheet (10), said sheet being folded at the top (114) of the pack so as to form two joined sheets, said sheets being bonded on their edges (111, 112, 113) to define the inner volume (2), the bottom bonded edges (111) including the insert (5), and/or
- the external end of the water inlet (3) is closed by the sheet bottom bonded edges (111).

15. A range of packs (1a, 1b) wherein the packs are according to any of the preceding claims and differ by the size of the inner volume (2) and/or the internal dimensions of the beverage outlet (4) and/or the internal dimensions of the water inlet (3) and/or the position of the water inlet (3) and/or the position of the beverage outlet (4).

16. A method for the preparation of a food or beverage comprising the steps of:
- providing a pack (1) according to any one of claims 1 to 14 and positioning said pack with the inlet and the outlet positioned downwardly,
- injecting water into the pack to mix with the food or beverage ingredient,
- allowing the prepared beverage to escape through the outlet into a receptacle.
and preferably the water inlet (3) is opened at the same time or after the opening of the beverage outlet (4).

17. Machine (8) for preparing a beverage from a pack (1) according to any one of Claims 1 to 14, said pack (1) comprising a beverage outlet closed by a plug (42), said machine comprising at least:
- a water supply (84),
- a pump (82) for pumping water from the water supply.
- a water needle (81) for injecting water in the water inlet (3) of the pack,
- a device 85 for cutting or tearing the plug (42) of the beverage outlet of the pack,
said machine being configured so that the plane (P) of the pack (1) is vertically oriented during beverage production while the water inlet (3) orientates the jet of water in a direction comprised in said plane (P) and the beverage outlet is oriented vertically at the bottom of the pack.

## Patentansprüche

1. Packung (1) mit einem Innenvolumen (2), in dem ein Nahrungsmittel- oder Getränkeinhaltsstoff aufbewahrt wird, und in dem ein Getränk erzeugt wird, wenn Wasser darin eingebracht wird, wobei die Packung Folgendes umfasst:
- mindestens einen Einlass (3), der dazu konfiguriert ist, Wasser in das Innenvolumen der Packung zu leiten,
- mindestens einen Auslass (4) zum Abgeben eines Getränks aus dem Innenvolumen der Packung,
- wobei der Einlass und der Auslass neben der Unterseite der Packung angeordnet sind,
wobei der Wassereinlass (3) dazu konfiguriert ist, Wasser in Form eines Strahls (6) in das Innenvolumen der Packung einzubringen,
wobei der Getränkeauslass ein gerades Rohr ist,
wobei die Packung **dadurch gekennzeichnet ist, dass** die Packung eine ebenflächige Form darstellt, die an einer Ebene (P) ausgerichtet ist, die während der Getränkeerzeugung vertikal ausgerichtet sein kann, während der Wassereinlass (3) den Wasserstrahl in einer Richtung in der Ebene ausrichtet und der Getränkeauslass (4) vertikal an der Unterseite der Packung ausgerichtet ist.

2. Packung nach Anspruch 1, wobei der Wasserstrahl eine Geschwindigkeit von mindestens etwa 20 m/s aufweisen kann.

3. Packung nach einem der vorstehenden Ansprüche, wobei der Wassereinlass (3) dazu konfiguriert ist, das Druckwasser, das durch eine Getränkemaschine in die Packung eingebracht wird, in einen Hochgeschwindigkeitswasserstrahl im Innenvolumen (2) der Packung umzuwandeln.

4. Packung nach einem der vorstehenden Ansprüche, wobei diese zwei flexible, wasserundurchlässige Folien umfasst, die miteinander verbunden sind, um das Innenvolumen (2) zu definieren.

5. Packung nach einem der vorstehenden Ansprüche, wobei der Getränkeauslass (4) das Getränk als freien Fluss abgeben kann.

6. Packung nach einem der vorstehenden Ansprüche, wobei der Getränkeauslass (4) eine Öffnung ist, die einen Querschnitt mit einer Fläche aufweist, die äquivalent zur Fläche einer Kreisfläche eines Durchmessers von mindestens 1 mm, vorzugsweise höchstens 4 mm, mehr bevorzugt zwischen 1,5 und 3 mm, ist.

7. Packung nach einem der vorstehenden Ansprüche, wobei der Nahrungsmittel- oder Getränkeinhaltsstoff ein löslicher Nahrungsmittel- oder Getränkeinhaltsstoff ist.

8. Packung nach einem der vorstehenden Ansprüche, wobei der Wassereinlass (3) ein Loch umfasst, das einen Querschnitt mit einer Fläche aufweist, die äquivalent zur Fläche einer Kreisfläche eines Durchmessers zwischen 0,5 und 1,5 mm, vorzugsweise höchstens 1 mm, mehr bevorzugt mindestens 0,24 mm, vorzugsweise zwischen 0,3 und 0,5 mm, weiter bevorzugt von etwa 0,4 mm ist.

9. Packung nach einem der vorstehenden Ansprüche, wobei der Wassereinlass dazu konfiguriert ist, den Wasserstrahl in Richtung des Getränkeauslasses (4) auszurichten.

10. Packung nach einem der vorstehenden Ansprüche, wobei die Packung einen einzelnen Einsatz (5) mit dem Wassereinlass (3) und dem Getränkeauslass (4) umfasst, wobei der einzelne Einsatz an der Unterseite (11) der Packung angeordnet ist, wobei der einzelne Einsatz (5) der Packung wahlweise eine Form zum Zusammenwirken mit dem Packungsaufnahmebereich einer Getränkeerzeugungsmaschine aufweist, und der einzelne Einsatz der Packung vorzugsweise eine Form aufweist, die zum Gleiten im Schlitz des Packungsaufnahmebereichs einer Getränkeerzeugungsmaschine konfiguriert ist.

11. Packung nach Anspruch 10, wobei der einzelne Einsatz (5) in oder neben der Mitte der Unterseite der Fläche angeordnet ist.

12. Packung nach Anspruch 10, wobei der einzelne Einsatz (5) in oder neben einer Unterseitenecke der Fläche angeordnet ist.

13. Packung nach einem der vorstehenden Ansprüche, wobei der Getränkeauslass mittels Fertigung verschlossen und dazu konfiguriert ist, im Getränkeerzeugungsschritt geöffnet zu werden, wobei der Getränkeauslass wahlweise durch einen Stopfen (42) verschlossen ist, wobei der Stopfen ein Mittel umfasst, um ihn nach dem Öffnen des Getränkeauslasses an der Packung angebracht zu halten, wobei vorzugsweise:
- das Mittel, um den Stopfen (42) an der Packung angebracht zu halten, eine Kunststoffbindung (43) ist, die an dem einzelnen Einsatz (5) angebracht ist, und/oder
- der Getränkeauslass eine Schwächungszone (44) nahe dem Stopfen aufweist,
und/oder
der Stopfen (42) Teil von einem einzelnen Einsatz (5) mit dem Wassereinlass (3) und dem Getränkeauslass (4) ist.

14. Packung nach einem der vorstehenden Ansprüche, wobei diese zwei flexible, wasserundurchlässige Folien umfasst, die miteinander verbunden sind, um das Innenvolumen (2) zu definieren, und wobei die Packung einen Einsatz (5) mit mindestens einem Wassereinlass (3) umfasst, und wobei der Wassereinlass (3) durch die Folien (10), die das Innenvolumen definieren, eingeschlossen ist, wobei wahlweise:
- die Packung eine ebenflächige Packung aus einer Materialfolie (10) ist, wobei die Folie an der Oberseite (114) der Packung derart gefaltet ist, dass zwei verbundene Folien gebildet werden, wobei die Folien an ihren Kanten (111, 112, 113) aneinander gebunden sind, um das Innenvolumen (2) zu definieren, wobei die gebundenen Unterseitenkanten (111) den Einsatz (5) einschließen,
und/oder
- das äußere Ende des Wassereinlasses (3) durch die aneinander gebundenen Unterseitenfolienkanten (111) verschlossen ist.

15. Palette aus Packungen (1 a, 1 b), wobei die Packungen gemäß einem der vorstehenden Ansprüche sind und sich durch die Größe des Innenvolumens (2) und/oder die Innenabmessungen des Getränkeauslasses (4) und/oder die Innenabmessungen des Wassereinlasses (3) und/oder die Position des Wassereinlasses (3) und/oder die Position des Getränkeauslasses (4) unterscheiden.

16. Verfahren zur Zubereitung eines Nahrungsmittels oder Getränks, folgende Schritte umfassend:
- Bereitstellen einer Packung (1) nach einem der Ansprüche 1 bis 14 und Anordnen der Packung mit dem Einlass und dem Auslass nach unten weisend,
- Einspritzen von Wasser zum Vermischen mit dem Nahrungsmittel- oder Getränkeinhaltsstoff,
- Zulassen, dass das zubereitete Getränk durch den Auslass in einen Behälter austritt,
und wobei vorzugsweise der Wassereinlass (3) gleichzeitig mit oder nach dem Öffnen des Getränkeauslasses (4) geöffnet wird.

17. Maschine (8) zur Zubereitung eines Getränks aus einer Packung (1) nach einem der Ansprüche 1 bis 14, wobei die Packung (1) einen Getränkeauslass umfasst, der durch einen Stopfen (42) verschlossen ist, wobei die Maschine mindestens Folgendes umfasst:
- eine Wasserversorgung (84),
- eine Pumpe (82) zum Pumpen von Wasser von der Wasserversorgung,
- eine Wassernadel (81) zum Einspritzen von Wasser in den Wassereinlass (3) der Packung,
- eine Vorrichtung (85) zum Zerschneiden oder Zerreißen des Stopfens (42) des Getränkeauslasses der Packung,
wobei die Maschine derart konfiguriert ist, dass die Ebene (P) der Packung (1) während der Getränkeerzeugung vertikal ausgerichtet ist, während der Wassereinlass (3) den Wasserstrahl in einer Richtung in der Ebene (P) ausrichtet und der Getränkeauslass (4) vertikal an der Unterseite der Packung ausgerichtet ist.

## Revendications

1. Conditionnement (1) avec un volume interne (2) dans lequel un ingrédient de produit alimentaire ou de boisson est stocké et dans lequel une boisson est produite lorsque de l'eau est introduite à l'intérieur, ledit conditionnement comprenant :
- au moins une entrée (3) conçue pour fournir de l'eau dans le volume interne du conditionnement,
- au moins une sortie (4) pour distribuer une boisson depuis le volume interne du conditionnement,
- l'entrée et la sortie étant positionnées à côté du fond du conditionnement,
l'entrée d'eau (3) étant conçue pour introduire de l'eau sous la forme d'un jet (6) dans le volume interne du conditionnement,
la sortie de boisson étant un tube droit,
ledit conditionnement étant **caractérisé en ce que** le conditionnement présente une forme plane orientée le long d'un plan (P) qui peut être orienté à la verticale pendant la production de boisson tandis que l'entrée d'eau (3) oriente le jet d'eau dans une direction comprise dans ledit plan, et la sortie de boisson (4) est orientée à la verticale au fond du conditionnement.

2. Conditionnement selon la revendication 1, dans lequel le jet d'eau peut présenter une vitesse d'au moins environ 20 m/s.

3. Conditionnement selon l'une quelconque des revendications précédentes, dans lequel l'entrée d'eau (3) est conçue pour transformer l'eau sous pression introduite par une machine à boisson dans le conditionnement en un jet d'eau à grande vitesse dans le volume interne (2) du conditionnement.

4. Conditionnement selon l'une quelconque des revendications précédentes, où il comprend deux feuilles flexibles imperméables à l'eau reliées l'une à l'autre pour définir le volume interne (2).

5. Conditionnement selon l'une quelconque des revendications précédentes, dans lequel la sortie de boisson (4) peut distribuer la boisson sous la forme d'un écoulement libre.

6. Conditionnement selon l'une quelconque des revendications précédentes, dans lequel la sortie de boisson (4) est une ouverture présentant une coupe transversale avec une zone de surface équivalente à la surface d'une surface circulaire de diamètre d'au moins 1 mm, de préférence au plus 4 mm, encore plus préférablement comprise entre 1,5 et 3 mm.

7. Conditionnement selon l'une quelconque des revendications précédentes, dans lequel l'ingrédient de produit alimentaire ou de boisson est un ingrédient soluble de produit alimentaire ou de boisson.

8. Conditionnement selon l'une quelconque des revendications précédentes, dans lequel l'entrée d'eau (3) comprend un trou présentant une coupe transversale avec une zone de surface équivalente à la surface d'une surface circulaire de diamètre compris entre 0,5 et 1,5 mm, de préférence au plus 1 mm, plus préférablement au moins 0,24 mm, de préférence compris entre 0,3 et 0,5 mm, encore plus préférablement d'environ 0,4 mm.

9. Conditionnement selon l'une quelconque des revendications précédentes, dans lequel l'entrée d'eau est conçue pour orienter le jet d'eau en direction de la sortie de boisson (4).

10. Conditionnement selon l'une quelconque des revendications précédentes, où ledit conditionnement comprend un insert unique (5) incluant l'entrée d'eau (3) et la sortie de boisson (4), ledit insert unique étant positionné au niveau du fond (11) du conditionnement, facultativement l'insert unique (5) du conditionnement présentant une forme destinée à coopérer avec la zone de réception de conditionnement d'une machine de production de boissons et, de préférence, l'insert unique du conditionnement présentant une forme conçue pour coulisser dans la fente de la zone de réception d'une machine de production de boisson.

11. Conditionnement selon la revendication 10, dans lequel l'insert unique (5) est positionné au niveau ou à côté du milieu du fond de ladite face.

12. Conditionnement selon la revendication 10, dans lequel l'insert unique (5) est positionné au niveau ou à côté d'un coin inférieur de ladite face.

13. Conditionnement selon l'une quelconque des revendications précédentes, dans lequel la sortie de boisson est fermée par fabrication et est conçue pour être ouverte lors de l'étape de production de boisson, facultativement la sortie de boisson est fermée par un bouchon (42), ledit bouchon comprenant un moyen pour le maintenir fixé au conditionnement après ouverture de la sortie de boisson, de préférence :
- le moyen de maintien du bouchon (42) fixé au conditionnement est un lien en plastique (43) fixé à l'insert unique (5),
et/ou
- la sortie de boisson présente une zone de faiblesse (44) à proximité du bouchon,
et/ou
le bouchon (42) fait partie d'un insert unique (5) incluant l'entrée d'eau (3) et la sortie de boisson (4).

14. Conditionnement selon l'une quelconque des revendications précédentes, où il comprend deux feuilles flexibles imperméables à l'eau reliées l'une à l'autre afin de définir le volume interne (2) et dans lequel le conditionnement comprend un insert (5) incluant au moins une entrée d'eau (3) et dans lequel l'entrée d'eau (3) est enserrée dans le conditionnement par les feuilles (10) définissant le volume interne, facultativement :
- le conditionnement est un conditionnement plan constitué d'une feuille de matériau (10), ladite feuille étant pliée sur le dessus (114) du conditionnement de manière à former deux feuilles reliées, lesdites feuilles étant liées sur leurs bords (111, 112, 113) afin de définir le volume interne (2), les bords liés inférieurs (111) incluant l'insert (5)
et/ou
- l'extrémité externe de l'entrée d'eau (3) est fermée par les bords liés inférieurs (111) de feuille.

15. Gamme de conditionnements (1 a, 1 b), dans laquelle les conditionnements sont conformes à l'une quelconque des revendications précédentes et diffèrent par la taille du volume interne (2) et/ou les dimensions internes de la sortie de boisson (4) et/ou les dimensions internes de l'entrée d'eau (3) et/ou la position de l'entrée d'eau (3) et/ou la position de la sortie de boisson (4).

16. Procédé de préparation d'un produit alimentaire ou d'une boisson comprenant les étapes consistant à :
- fournir un conditionnement (1) selon l'une quelconque des revendications 1 à 14 et positionner ledit conditionnement avec l'entrée et la sortie positionnées vers le bas,
- injecter d l'eau dans le conditionnement pour la mélanger avec l'ingrédient de produit alimentaire ou de boisson,
- laisser la boisson préparée s'échapper à travers la sortie dans un réceptacle
et, de préférence, l'entrée d'eau (3) est ouverte en même temps que, ou après, l'ouverture de la sortie de boisson (4).

17. Machine (8) pour la préparation d'une boisson à partir d'un conditionnement (1) selon l'une quelconque des revendications 1 à 14, ledit conditionnement (1) comprenant une sortie de boisson fermée par un bouchon (42), ladite machine comprenant au moins:
- une alimentation en eau (84),
- une pompe (82) pour pomper l'eau depuis l'alimentation en eau,
- une aiguille d'eau (81) pour injecter l'eau dans l'entrée d'eau (3) du conditionnement,
- un dispositif (85) pour couper ou déchirer le bouchon (42) de la sortie de boisson du conditionnement,
ladite machine étant conçue de sorte que le plan (P) du conditionnement (1) est orienté à la verticale pendant la production de boisson tandis que l'entrée d'eau (3) oriente le jet d'eau dans une direction comprise dans ledit plan (P) et la sortie de boisson est orientée à la verticale au niveau du fond du conditionnement.
